# EUROPÄISCHE PATENTANMELDUNG

(11) **EP 0 895 844 A2**
(43) Veröffentlichungstag der Anmeldung: **10.02.1999**
(21) Anmeldenummer: 98114533.7
(22) Anmeldetag: 03.08.1998
(51) Int. Cl.: B29C 31/02, B67D 5/34

(54) **Harzeinfüllgefäss mit Schliessvorrichtung**

(30) Priorität: 04.08.1997 DE 19733661
(71) Anmelder: Blatt, Bruno, 35578 Wetzlar (DE)
(72) Erfinder: Blatt, Bruno, 35578 Wetzlar (DE)
(74) Vertreter: Missling, Arne, Dipl.-Ing.

(57) **Zusammenfassung**

Flüssige aushärtbare Kunststoffe werden unter Vakuum in eine Form gebracht, indem man meist einen Behälter nimmt, in dem ein Schlauchende in die Flüssigkeit eingetaucht,, und das andere Ende des Schlauches auf einen Stutzen an der Form aufgesteckt ist. Unter Vakuum wird das Harz in die Form gesaugt. Am Ende des Füllvorganges wird der Schlauch abgeklemmt , damit keine Luft in die Form gelangt, und so zum Ausschuß führt, deshalt wird dieser Füllprozess auch vom Personal überwacht.
Eine Lösung dieses Problemes stellt ein in 3 Baugruppen zerlegbares Harzeinfüllgefäß Fig. 3 dar . Es besteht im wesentlichen aus einem Behälter (6) mit einem Auslaufstutzen (10), einer Brücke (3) mit Aufhängevorrichtung (1) und einem Hohlkörper als Verschlußelement (9) mit einem Rohr (8). Verchlußelement (9), Auslauföffnung (16), deren Geometrie und Füllgut (7) sind aufeinander abgestimmt. Der Behälter (6) wird über den Harzeinfüllgefäß (11) angeschlossen, befüllt, und das Verschlußelement (9) geöffnet, das Harz (7) läuft in die Form und das Verchlußelement (9) rutscht bei Erreichen des minimalen Flüssigkeitspegels in die Schließposition (13). Dieser Füllprozess muß nicht überwacht werden.

## Beschreibung

Die Erfindung bezieht sich auf eine Vorrichtung zum Einbringen von katalysierten Reaktionsharzen in ein unter Vakuum stehendes geschlossenenes Formsystem.
Es ist bekannt, das beim Vakuuminjektionsverfahren mit einer festen unteren Formhälfte und einer leichten, festen Gegenform gearbeitet wird.
In der Gegenform befinden sich am Formrand ein Schließkanal, welcher am äußeren und inneren Rand jeweils eine Moosgummidichtung aufweist.
Als äußere Begrenzung der innenliegenden Formteilkontur befindet sich ein Harzfüllkanal, der als Ringkanal ausgebildet ist, mit einem nach außerhalb der Form stehenden Harzeinfüllstutzen. An einem zentralen Punkt innerhalb der Formteilkontur befindet sich in der Gegenform ein nach außerhalb stehender Absaugstutzen.
In eine Formhälfte wird beispielsweise ein Verstärkungsmaterial aus Glas,- oder anderen Fasern eingebracht. Danach werden die Formhälften zusammengelegt und an dem
Schließkanal wird Vakuum angelegt. Am Harzeinfüllstutzen wird ein Schlauch befestigt, und am Absaugstutzen wird ebenfalls ein Schlauch befestigt, der über ein Überlaufgefäß mit der Vakuumleitung in Verbindung steht. Der Harzfüllschlauch wird verschlossen mittels einer Klemme und der Forminnenraum wird evakuiert. Das andere Ende des Harzfüllschlauches wird wird in ein Gefäß mit katalysiertem Reaktionsharz getaucht und die Klemme an diesem Schlauch wird gelöst.
Der Differenzdruck zwischen Form- innenraum und Atmosphärischem Druck drückt das Harz über den Schlauch, Harzeinfüllstutzen in den Harzringkanal . Das Harz bildet eine zum Absaugpunkt immer kleiner werdende Fließfront und tränkt hierbei das Verstärkungsmaterial luftblasenfrei. Rechtzeitig, bevor über den Harzfüllschlauch Luft in die Form eingesaugt werden kann, muß dieser Schlauch mit einer Klemme verschlossen werden. Obwohl dieser Formfüllvorgang ständig durch Personal überwacht wird, entstehen immer wieder Ausschußteile durch nicht rechtzeitiges Verschließen des Schlauches. Ein absolutes Abdichten des Harzfüllschlauches ist bei Schläuchen über 10 mm Innendurchmesser nur mit großem Kraftaufwand möglich.

Es ist Aufgabe der Erfindung, den Harzfüllvorgang so zu gestalten, daß der Zeitaufwand für das Überwachen weitgehendst entfallen kann.
Weiterhin soll das lästige und unsichere Verschließen des Harzfüllschlauches mittels Klemmen durch eine andere und sicherere Verschlußmethode ersetzt und hierdurch eine Ausschußminimierung erreicht werden.

Die gestellte Aufgabe ist erfindungsgemäß dadurch gelöst, daß das Harzeinfüllgefäß folgende Merkmale aufweist:
a) Die Geometrie des Behälters ist an allen Harz kontaktierenden Flächen konisch ausgearbeitet.
b) Der Behälter ist aus einem den Füllgütern resistenten Material gefertigt
c) Das Harzeinfüllgefäß besitzt eine abnehmbare Brücke mit Aufhängevorrich tung. In die Brücke ist ein Führungselement für das Verschlußelement integriert.
d) Die Verbindung zwischen Behälter und Brücke erfolgt mittel Schnellverbindungselementen.
e) In dem Harzeinfüllgefäß ist ein Verschlußelement lose angeordnet.
f) Das Verschlußelement besteht aus einem Hohlkörper und aus einem mit dem Hohlkörper festverbundenem leichten Rohr mit einem Hubbegrenzungselement.
g) Die Auftriebskraft des Verschlußelementes in dem Füllgut ist kleiner als die Kraft, die in Gegenrichtung über die Harzauslautöffnung auf das Verschlußelement einwirkt.
h) Das Verschlußelement ist aus einem den Füllgütern resistenten Material gefertigt. Die Geometrie des Verschlußelementes weist einen konvexen Kurvenverlauf auf, der ein leichtes Entformen aus der ausgehärteten Restharzmenge im Behälter ermöglicht.
i) Das Verschließen des Harzfüllschlauches, bzw des Harzeinfüllgefäßes läuft automatisch nach Erreichen des minimalen Flüssigkeitspegels in dem Behälter ab und funktioniert nach dem Prinzip Kugel in Kegel. Das Verschlußelement rutscht in die in die Harzauslauföffnung, und der Sog des Füllgutes in dem Formsystem wirkt so über die Harzauslauföffnung mit einem Unterdruck auf das Verschlußelement, das ein Nachlaufen vom Füllgut aus dem Behälter in die Form nicht erfolgen kann. Die verbleibende Restfüllgutmenge in dem Behälter entspricht in etwa der, des Verdrängungsvermögens des Verschlußelementes
j) Der Auslaufstutzen ist aus Metall gefertigt, und fest mit dem Behälter verbunden.
k) Das Harzeinfüllgefäß kann durch das Lösen der Schnellverbindungselemente leicht in Einzelteile demontiert und gereinigt werden.
l) Der Behälter und das Verschlußelement werden mit Trennmittel behandelt, um ein Anhaften des ausgehärteten Füllgutes zu verhindern.

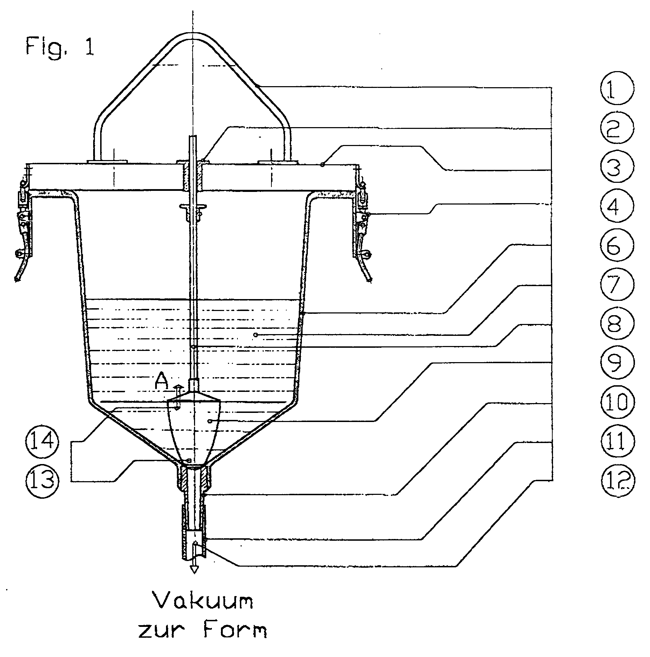

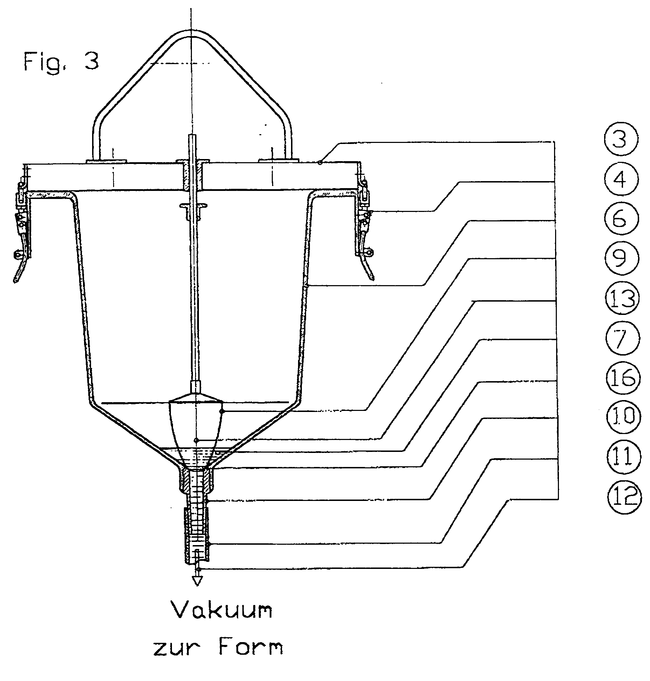

Bei dem Fertigungsprozeß werden die Schläuche wie bisher an den dafür vorgesehenen Stutzen befestigt. Bei dem Harzeinfüllstutzen kann jedoch ein erheblich kürzerer Schlauch befestigt werden, als bisher verwandt wurde. Dieser Harzfüllschlauch (11) braucht nicht mit einer Klemme verschlossen werden. Die Schließfunktion wird von dem Harzeinfüllgefäß Fig.1 übernommen, welches direkt über den Harzeinfüllstutzen positioniert wird. Der Forminnenraum wird evakuiert, das Verchlußelement (9) befindet sich in der Schließposition (13), und wird mittels des Führungselementes (2) in der Brücke (3) lotreckt zum Auslaufstutzen (10) gehalten. Das Füllgut (7) wird in den Behälter (6) eingebracht. Da das Verschlußelement (9) mittels Vakuum (12) in seiner Schließposition (13) gehalten wird , weil die Auftriebskraft (14) kleiner ist als die Haltekraft des Vakuums (12), muß das Verschlußelement (9), durch das mit dem Verschlußelement (9) fest verbundene Rohr (8), das aus dem Führungselement (2) in der Brücke (3) herausragt, manuell angehoben werden, um dem Füllgut (7), durch den Auslaufstutzen (10) und Harzfüllschlauch (11) den Weg in die evakuierte Form freizugeben.
Die Auftriebskraft (14) hält das Verschlußelement (9) in der Offenposition (15) fest, die nach oben zur Brücke (3) hin durch das mit dem Rohr (8) vom Verschlußelement (9) festverbundene Hubbegrenzungselement (5) begrenzt ist, bis der Behälter (6) soweit leer gelaufen ist , daß das Verschlußelement (9) unter Einwirkung der Schwerkraft in die kegelförmige Verschlußöffnung (16) des Auslaufstutzen (10) rutscht. Das abfließende Füllgut (7) erzeugt ein leichtes Vakuum (12), daß das Verschlußelement (9) in seiner Schließposition (13) hält. Das restlicheFüllgut (7) in dem Behälter (6) sorgen für eine absolute Abdichtung des Formsystems gegenüber des atmosphärischen Luftdruckes, bis zur Aushärtung des Füllgutes (7). Es kann keine Luft in das Formsystem gesaugt werden. Nach dem Aushärten des Füllgutes wird das Vakuum (12) abgeschaltet und der Harzfüllschlauch (11) von dem Auslaufstutzen (10) entfernt. Das Harzeinfüllgefäß Fig 3 wird aus der Füllposition entfernt, die Brüche (3) mit den Schnellverbindungselementen (4) vom Behälter (6) getrennt und das Verschlußelement (9) kann entfernt werden. Der Behälter (6) und das Verschlußelement (9) werden von den ausgehärteten Füllgutresten (7) gereinigt und neu mit Trennmittel behandelt.

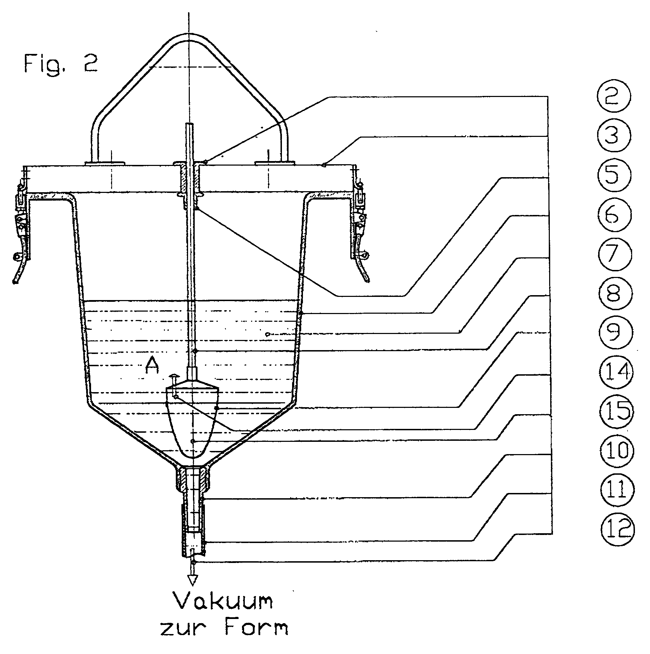

### Bezugzeichenliste zu Fig. 1- 3

- Fig. 1): 1 Aufhängevorrichtung
2 Führungselement für Verschlußelement
3 Brücke,
4 Schnellverbindungselement
6 Behälter
7 Füllgut
8 Rohr vom Verschlußelement
9 Verschlußelement,
10 Auslaufstutzen
11 Harzfüllschlauch
12 Vakuum zur Formseite
13 Schließposition
14 Auftriebskrafteinwirkung
- Fig. 2): 2 Führungselement für Verschlußelement
3 Brücke
5 Hubbegrenzungselement
6 Behälter
7 Füllgut
8 Rohr
9 Verschlußelement
14 Auftriebskrafteinwirkung
15 Offenposition
10 Auslaufstutzen
11 Harzfüllschlauch
12 Vakuum zur Formseite
- Fig. 3: 3 Brücke
4 Schnellverbindungselement
6 Behälter
9 Verschlußelement
13 Schließposition
7 Füllgut
16 Verschlußöffnung
10 Auslaufstutzen
11 Harzfüllschlauch
12 Vakuum zur Formseite

## Patentansprüche

1. Harzeinfüllgefäß zur Befüllung von in sich geschlossenen Werkzeugsystemen mit flüssigen Kunstoffen, die nach dem Füllvorgang in dein Werkezeugsystem aushärten, insbesondere zur Befüllung nach dem Vakuuminjektionsverfahren, dadurch gekennzeichnet, daß ein Behälter im Innenbereich eine sich nach unten allseitig verjüngende Geometrie aufweist und das im unteren Bereich ein Auslaufstutzen (10) integriert ist ,eine abnehmbare Brücke (3) mit Aufhängevorrichtung (1) hat, und ein loses Verschlußelement (9) mit einer speziellen Geometrie und Austarierung besitzt, das es ermöglicht, daß der flüssige Kunststoff (7) in das Werkzeugsystem eingebracht wird und bei Erreichen eines bestimmten minimalen Pegels das Verschlußelement (9) in seine Schließposition (13) gleitet und somit ein absolutes Abdichten des Werkzeugsystems gegenüber des äußeren Luftdruckes erreicht.

2. Harzeinfüllgefäß nach Anspruch 1, dadurch gekennzeichnet, daß der Behälter (6) aus einem translueszentem glasfaserverstärken Kunststoff gefertigt ist.

3. Harzeinfüllgefäß nach Anspruch 1-2, dadurch gekennzeichnet, daß die Innenkontur des Behälters (6) eine sich nach unten verjüngende Geometrie aufweist.

4. Harzeinfüllgefäß nach Anspruch 1-3, dadurch gekennzeichnet, daß die Brückeneinheit, bestehend aus einer Aufhängevorrichtung (1) und einem rechteckigem Hohlprofil (3) und aus einem Führungselement (2), mit Schnellverbindungselementen (4) mit dem Behälter (6) verbunden sind.

5. Harzeinfüllgefäß nach Anspruch 1-4, dadurch gekennzeichnet, daß das Führungselement (2) nicht aus Metall gefertigt ist.

6. Harzeinfüllgefäß nach Anspruch 1 -5, dadurch gekennzeichnet, daß das Führungselement (2) eine so große Toleranz gegenüber dem Rohr (8) des Verschlußelementes (9) aufweist, daß die Reibung des Rohres (8) des Vershlußelementes (9) gegenüber dem Führungselement auf ein Minimum reduziert ist.

7. Harzeinfüllgefäß nach Anspruch 1-6, dadurch gekennzeichnet, daß das Auslaufstutzen (10) nicht aus Kunststoff gefertigt ist.

8. Harzeinfüllgefäß nach Anspruch 1-7, dadurch gekennzeichnet, daß das Auslaufstutzen (10) innen eine sich nach unten hin verjüngende Geometrie aufweist.

9. Harzeinfüllgefäß nach Anspruch 1-8, dadurch gekennzeichnet, daß das Auslaufstutzen (10) im äußeren Stutzenbereich eine sich nach unten verjüngende und in der Draufsicht kreisförmige Geometrie aufweist, die im unteren Durchmesser kleiner ist als der Nenndurchmesser des Harzfüllschlauches (11), so , daß der Harzfüllschlauch (11) sich auf den Auslaufstutzen (10) schieben läßt, unter Berücksichtigung, daß die Flexibilität des Harzfüllschlauches (11) es ermöglicht, das sich der Harzfüllschlauch (11) beim Aufschieben auf den Auslaufstutzen (10) so weit ausdehnt, das eine kraftschlüssige und luftdichte Verbindung zwischen Auslaufstutzen (10) und Harzfüllschlauch (11) hergestellt ist.

10. Harzeinfüllgefäß nach Anspruch 1-9, dadurch gekennzeichnet, daß das Auslaufstutzen (10) mit dem Behälter (6) kraftschlüssig und luftdicht verbunden ist.

11. Harzeinfüllgefäß nach Anspruch 1-10, dadurch gekennzeichnet, das in dem Harzfüllgefäß eine lose herausnehmbare Verschlußeinheit augeordnet ist, bestehend aus einem Vershlußelement (9) und einem mit dem Verschlußelement kraftschlüssig verbundenem Rohr ((8).

12. Harzeinfüllgefäß nach Anspruch 1 -11, dadurch gekennzeichnet, daß das Verschußelement (9) als Hohlkörper ausgebildet ist.

13. Harzeinfüllgefäß nach Anspruch 1- 12, dadurch gekennzeichnet, daß das Verschlußelement (9) eine sich nach unten verjüngende parabelförmige und in der Draufsicht kreisförmige Geometrie aufweist, um ein leichtes Trennen des Verschlußelementes (9) vom ausgehärteten restlichen Füllgut (7) zu ermöglichen.

14. Harzeinfüllgefäß nach Anspruch 1 -13, dadurch gekennzeichnet, daß das Verschlußelement (9) einen Auftriebskraft (14) entwickelt, die kleiner ist als der, durch die Verschlußöffnung (16) auf das Verschlußelement (9) einwirkende Krafteinfluß (12), der durch das in dem geschlossenem Formsystem aufgebaute notwendige Vakuum (12).

15. Harzeinfüllgefäß nach Anspruch 1-14, dadurch gekennzeichnet, daß das Verschlußelement (9) nicht aus Metall gefertigt ist.

16. Harzeinfüllgefäß nach Anspruch 1- 15, dadurch gekennzeichnet, daß das Rohr (8) des Verschlußelementes (9) mit einem Hubbegrenzungselement (2) ausgestattet ist, das so eingestellt ist, daß die Auftriebskraft (14) das Verschlußelement (9) in eine bestimmte Offenposition (15) hält, die soweit von der Vershchlußöffnung (16) entfernt ist, das der Sog des Füllgutes (7) es nicht vermag, während des Füllprozesses das Verschlußelement (9) in seine Schließposition (13) zu ziehen.

17. Harzeinfüllgefäß nach Anspruch 1 - 16, dadurch gekennzeichnet, daß das Hubbegrenzungselement (2) an dem Rohr (8) des Verschlußelementes (9) nicht verstellbar angeordnet ist, und durch eine kraftschlüssige Verbindung mit dem Rohr (8) des Verschlußelementes (9) verbunden ist.

18. Harzeinfüllgefäß nach Anspruch 1-17, dadurch gekennzeichnet, daß das Hubbegrenzungselement (2) nicht aus Metall gefertigt ist
